# EUROPÄISCHE PATENTSCHRIFT

(11) **EP 0 992 418 B1**
(45) Veröffentlichungstag und Bekanntmachung des Hinweises auf die Patenterteilung: **28.01.2004**
(21) Anmeldenummer: 99116845.1
(22) Anmeldetag: 03.09.1999
(51) Int. Cl.: B62D 21/15, B62D 25/10, B60R 21/34

(54) **Karosseriehaube, insbesondere Motorraumhaube eines Kraftfahrzeugs**
Bonnet , especially engine bonnet for a motor car
Capot, spécialement capot-moteur d'un véhicule automobile

(30) Priorität: 07.10.1998 DE 19846192
(43) Veröffentlichungstag der Anmeldung: 12.04.2000
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE); Wohllebe, Thomas, Dipl.-Ing., 38110 Braunschweig (DE); Zogalla, Gerhard, 38471 Rühen (DE); Schmücker, Martin, 38106 Braunschweig (DE); Pries, Holger, Dr., 38179 Schwülper (DE); Siebels, Johann, Dipl.-Ing., 38444 Wolfsburg (DE)
(74) Vertreter: Neubauer, Hans-Jürgen, Dipl.-Phys.

(56) Entgegenhaltungen:
- DE-A- 2 711 339
- DE-A- 19 514 324
- PATENT ABSTRACTS OF JAPAN vol. 1998, no. 10, 31. August 1998 (1998-08-31) & JP 10 138325 A (PLACO CO LTD), 26. Mai 1998 (1998-05-26)

## Beschreibung

Die Erfindung betrifft eine Karosseriehaube, insbesondere eine Motorraumhaube eines Kraftfahrzeugs nach dem Oberbegriff des Anspruchs 1.

Bei einer Fußgänger-Fahrzeug-Kollision, insbesondere bei einem Frontaufprall eines Fahrzeugs. auf einen Fußgänger wird dieser an den Füßen meist ausgehebelt und schlägt mit dem Oberkörper und Kopf auf die Motorraumhaube. Herkömmliche Motorraumhauben weisen eine Haubenwand auf, die sich wenigstens an seitlichen Auflageteilen eines Fahrzeugaufbaus abstützt und die den Motorraum frei überspannt. Zum Schutz von Fußgängern bei einem Aufprall auf die Motorraumhaube ist bereits bekannt, diese in einem mittleren Haubenwandbereich als potentiellem Aufschlagbereich eines Fußgängers nachgiebig und verformbar auszubilden.

Aus der gattungsbildenden FR 2 621 677 A ist bereits eine Karosseriehaube mit einer Haubenwand bekannt, die ein Oberteil, ein Unterteil und eine energieabsorbierende Zwischenlage aufweist.

Konkret ist hier zwischen dem Oberteil und dem Unterteil eine Deformationsschicht als energieabsorbierende Zwischenlage vorgesehen, die zahlreiche Ausbuchtungen aufweist. Das Unterteil ist hier relativ weich ausgebildet und soll eine hohe Elastizitätsgrenze aufweisen. Mit einem derartigen Aufbau einer Fronthaube soll einerseits ein nach außen hin steifer Aufbau zur Verfügung gestellt werden, der andererseits jedoch bei z.B. einem Aufprall unter Energieabsorption verformbar ist.

Ein Aufbau einer Fronthaube mit einem gewölbten Querschnitt zur Ausbildung eines relativ großen Deformationsweges zwischen einem Motor und der Fronthaube ist aus der DE 27 11 339 A1 bekannt.

Aus der US 4,950,522 A ist ein vollständig aus Kunststoff aufgebautes Karosserieteil bekannt, das eine Oberschicht, eine Unterschicht und eine dazwischen angeordnete energieabsorbierende Zwischenlage aufweist.

Aus der JP 10138325 ist eine Fronthaube bekannt, die eine Außenhaut aus einem relativ steifen synthetischem Harz und ein Unterteil als Unterlage aus einem demgegenüber weicheren synthetischen Harz aufweist. Die Fronthaube wird durch Blasformen hergestellt, so dass zwischen der Oberhaut und der Unterhaut ein Hohlraum ausgebildet wird, der im Falle eines Fußgängeraufpralls auf die Fronthaube den Anprall dämpfen soll.

Eine Fronthaube in Verbindung mit unterschiedlichen Ausgestaltungen energieabsorbierender Elemente ist auch aus der DE 195 14 324 A1 bekannt.

Aufgabe der Erfindung ist es, eine gattungsgemäße Karosseriehaube, insbesondere eine Motorraumhaube so weiterzubilden, dass der Fußgängerschutz bei einer Fußgänger-Fahrzeug-Kollision verbessert wird.

Diese Aufgabe wird mit den Merkmalen des Anspruchs 1 gelöst.

Gemäß Anspruch 1 ist das Unterteil sehr steif ausgebildet. Das Oberteil ist als Oberschale schwimmend auf der energieabsorbierenden Zwischenlage gelagert.

Mit einem derartigen Aufbau wird erreicht, dass z.B. bei kleineren Krafteinwirkungen nur das Oberteil mit der energieabsorbierenden Zwischenlage verformt wird, während das Unterteil sehr steif und formhaltig ausgebildet ist und erst bei hohen Krafteinwirkungen mit verformt. Gemäß einer bevorzugten Ausgestaltung kann das Unterteil aus Stahl, Aluminium oder Magnesium als Blechteil oder Gussteil hergestellt sein; wobei zur Erhöhung der Steifigkeit eine Rippenstruktur vorgesehen ist. Die energieabsorbierende Zwischenlage wird vorzugsweise in an sich bekannter Weise als Wabenstruktur verschiedener Materialien, Aluschaum oder Hartschaum, insbesondere aus strukturiertem Polypropylen- oder Polyurethanschaum hergestellt. Durch die Trennung von Ober- und Unterteil ist eine bedingte Trennung der Funktionen (Haubensteifigkeit sowie Festigkeit für Fußgängerschutz, Fahrbetrieb und Frontalaufprall) möglich. Vorteilhaft wird mit einem derartigen, erfindungsgemäßen Aufbau erreicht, dass keine hohen lokalen Steifigkeiten vorliegen, die bei einem Fußgängeraufprall zu ungünstigen Kraftspitzen führen können. Zudem ist durch die Zwischenlage die Haubenelastizität reduziert. Die Energieabsorption erfolgt hier im Wesentlichen in der Zwischenlage, wobei auch durch die verformenden Blechteile Energie absorbiert wird.

Das Oberteil ist als durchgehendes, leicht verformbares Blechteil, vorzugsweise aus Stahl, Aluminium, Materialien wie SMC (Sheet Molding Compound) und CFK (Carbonfaserverstärkter Kunststoff) oder aus einer Sandwichbauweise ausgeführt. In einer alternativen Ausgestaltung kann das Oberteil bei gleicher Funktion der Gesamtanordnung folienartig glatt und mit der Zwischenlage materialeinheitlich ausgebildet sein. Dabei ist vorzugsweise am Oberteil integral an dessen Unterseite Hartschaum angeformt oder angespritzt. Dadurch kann ggfs. eine kostengünstige Haubenherstellung erreicht werden.

Besonders bevorzugt verläuft dabei die Haubenwand im Querschnitt durch einen mittleren Haubenbereich dergestalt, dass sich an einen etwa horizontal flach verlaufenden Mittelteil seitlich Bogenteile anschließen, die jeweils mit einem freien Bogenende auf dem zugeordneten, seitlichen Auflageteil abgestützt sind. Durch eine solche Formgebung werden zwei an sich konträre Forderungen, nämlich einerseits eine hohe Haubenstabilität und Haubenfestigkeit und andererseits eine leichte, energieabsorbierende Verformung beim Aufprall eines Fußgängers kombinierbar. Die Seitenbereiche mit den Bogenteilen ergeben dazu insbesondere eine hohe Abstützstabilität, während der mittlere Haubenwandbereich als potentieller Aufschlagbereich eines Fußgängers flach und damit bei insgesamt hoher Haubenstabilität bei den Krafteinwirkungen eines Fußgängeraufpralls energieabsorbierend verformbar gehalten werden kann.

Für Ausführungsformen, bei denen sich die Karosseriehaube bei einem Fußgängeraufprall insgesamt nach unten verformt, soll vorzugsweise ein Abstand als möglicher Verformungsweg von der Haubenunterseite bis zu einem darunter liegenden, unverformbaren Fahrzeugteil, insbesondere einer Brennkraftmaschine, entsprechend der gestellten Anforderungen zur Verfügung stehen.

Durch eine Lochung des Unterteils und/oder der Zwischenlage ist als zusätzlicher, vorteilhafter Effekt eine Schall-Dämmwirkung erreichbar.

Anhand einer Zeichnung wird die Erfindung näher erläutert.

Es zeigen:

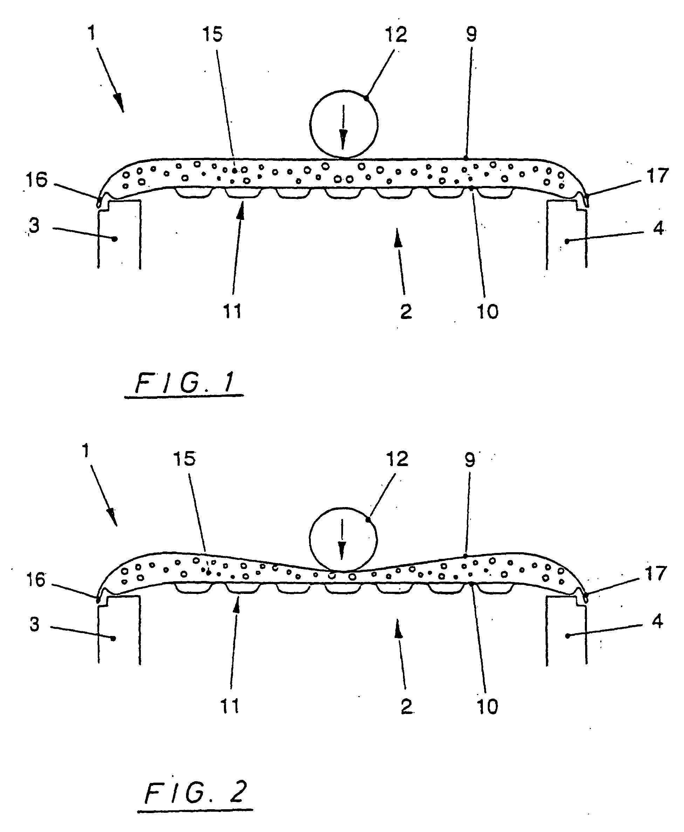

Fig. 1 und 2 eine schematische Darstellung einer Motorhaube im unverformten und verformten Zustand.

Eine Motorhaube 1 weist eine Haubenwand 2 auf, die wiederum ein Oberteil 9 und ein Unterteil 10 aufweist, das durch eine stabile Rippenstruktur 11 sehr steif ausgeführt ist. Zwischen dem Oberteil 9 und dem Unterteil 10 ist eine energieabsorbierende Zwischenlage 15 eingebracht, auf der das Oberteil 9 schwimmend gelagert ist. Das Oberteil 9 greift durch seitliche Überstände 16, 17 in zugeordnete Längsfalze der Auflageteile 3, 4 ein und ist damit trotz der schwimmenden Lagerung gegen eine seitliche Verschiebung gesichert.

Das Oberteil 9 ist hier als Blechteil aus Stahl, Aluminium, Materialien wie SMC und CFK, oder in Sandwichbauweise mit verschiedenen Materialkombinationen ausgeführt, während das stabile Unterteil 10 mit der Rippenstruktur 11 vorzugsweise als Gussteil in Stahl oder Aluminium hergestellt ist.

In Fig. 2 ist der Zustand beim Auftreffen eines Fußgängers entsprechend der Belastungskugel 12 dargestellt, wobei das steife Unterteil 10 im wesentlichen formhaltig in seiner Position verbleibt und die Energieabsorption durch Verformung der Zwischenlage 15 erfolgt.

Die Zwischenlage 15 kann hierbei eine Wabenstruktur verschiedener Materialien aufweisen oder aus Hartschaum, Aluschaum oder aus strukturiertem Polypropylen- oder Polyurethanschaum hergestellt sein. Dabei kann in einer Alternative das Oberteil 9 auch materialeinheitlich als glattes Folienteil mit der Zwischenlage 15 verbunden sein.

Lochungen des Unterteils 10 und evtl. der Zwischenlage 15 ergeben zudem eine vorteilhafte Schalldämmwirkung.

## Patentansprüche

1. Karosseriehaube, insbesondere Motorraumhaube eines Kraftfahrzeugs, mit einer Haubenwand (2), die ein Oberteil (9), ein Unterteil (10) und eine energieabsorbierende Zwischenlage (15) aufweist,
**dadurch gekennzeichnet,**
**dass** das Unterteil (10) sehr steif ausgebildet ist, und
**dass** das Oberteil (9) als Oberschate schwimmend auf der energieabsorbierenden Zwischenlage (15) gelagert ist.

2. Karosseriehaube nach Anspruch 1, **dadurch gekennzeichnet, dass** das Unterteil (10) aus Stahl, aus Aluminium oder aus Magnesium und dabei als Blechteil oder Gussteil hergestellt ist.

3. Karosseriehaube nach Anspruch 1 oder Anspruch 2, **dadurch gekennzeichnet, dass** das Unterteil (10) mit einer Rippenstruktur (11) hergestellt ist.

4. Karosseriehaube nach einem der Ansprüche 1 bis 3, **dadurch gekennzeichnet, dass** die Zwischenlage (15) eine Wabenstruktur aufweist oder aus Hartschaum, Aluschaum oder aus strukturiertem Polypropylen oder Polyurethan hergestellt ist.

5. Karosseriehaube nach einem der Ansprüche 1 bis 4, **dadurch gekennzeichnet, dass** das Oberteil (9) ein durchgehendes Blechteil aus Stahl, Aluminium, SMC, CFK oder eine Sandwichbauweise mit verschiedenen Materialkombinationen ist.

6. Karosseriehaube nach einem der Ansprüche 1 bis 4, **dadurch gekennzeichnet, dass** das Oberteil (9) folienartig glatt und mit der Zwischenlage (15) materialeinheitlich ausgebildet ist, wobei am Oberteil (9) integral an dessen Unterseite Hartschaum als Zwischenlage (15) angeformt oder angespritzt ist.

7. Karosseriehaube nach einem der Ansprüche 1 bis 6, **dadurch gekennzeichnet, dass** sich die Haubenwand (2) in eingebandem Zustand wenigstens an seitlichen Auflageteilen (3, 4) eines Fahrzeugaufbaus abstützt und den abgedeckten Karosserieraum (5) frei überspannt, dass die Haubenwand (2) wenigstens in einem mittleren Haubenwandbereich als potentiellem Aufschlagbereich eines Fußgängers bei einer Fußgänger-Fahrzeug-Kollision nachgiebig und verformbar ausgebildet ist, und
dass die Haubenwand (2) im Querschnitt durch einen mittleren Haubenbereich dergestalt verläuft, dass sich an einen etwa horizontal flach verlaufenden und nur wenig aufgewölbten Mittelteil (6) seitlich Bogenteile (7, 8) anschließen, die jeweils mit einem freien Bogenende auf dem zugeordneten seitlichen Auflageteil (3, 4) abgestützt sind.

8. Karosseriehaube nach einem der Ansprüche 1 bis 7, **dadurch gekennzeichnet, dass** das Unterteil (10) und/oder die Zwischenlage (15) eine Lochung aufweist.

## Claims

1. Bonnet, in particular engine bonnet of a motor vehicle, having a bonnet wall (2) which has an upper part (9), a lower part (10) and an energy-absorbing intermediate layer (15), **characterized in that** the lower part (10) is of very stiff design, and **in that** the upper part (9) is mounted as an upright shell in a floating manner on the energy-absorbing intermediate layer (15).

2. Bonnet according to Claim 1, **characterized in that** the lower part (10) is produced from steel, from aluminium or from magnesium and has a sheet-metal part or cast part.

3. Bonnet according to Claim 1 or Claim 2, **characterized in that** the lower part (10) is produced with a ribbed structure (11).

4. Bonnet according to one of Claims 1 to 3, **characterized in that** the intermediate layer (15) has a honeycomb structure or is produced from rigid foam, aluminium foam or from structured polypropylene or polyurethane.

5. Bonnet according to one of Claims 1 to 4, **characterized in that** the upper part (9) is a continuous sheet-metal part of steel, aluminium, SMC, carbon-fibre-reinforced plastic or a sandwich-type construction with different combinations of material.

6. Bonnet according to one of Claims 1 to 4, **characterized in that** the upper part (9) is designed such that it is smooth in the manner of a film and of one material of the intermediate layer (15), rigid foam being integrally formed or injection-moulded integrally on the lower side of the upper part (9) as intermediate layer (15).

7. Bonnet according to one of Claims 1 to 6, **characterized in that**, in the fitted state, the bonnet wall (2) is supported at least on lateral support parts (3, 4) of a vehicle body and freely spans the covered bodywork space (5), **in that** the bonnet wall (2) is of flexible and deformable design at least in a central bonnet wall region for the potential impact region of a pedestrian in a collision between a pedestrian and vehicle, and **in that** the bonnet wall (2) in cross section runs through a central bonnet region in such a manner that curved parts (7, 8) which are each supported at one free end of the curve on the associated, lateral support part (3, 4) laterally adjoin a central part (6) which has an approximately horizontal and flat profile and only a slight curvature.

8. Bonnet according to one of Claims 1 to 7, **characterized in that** the lower part (10) and/or the intermediate layer (15) is perforated.

## Revendications

1. Capot de carrosserie, notamment un capot de compartiment moteur d'un véhicule automobile, doté d'une paroi (2) de capot comportant une partie supérieure (9), une partie inférieure (10) et une couche intermédiaire (15) absorbant l'énergie,
**caractérisé en ce que**
la partie inférieure (10) est conçue de façon très rigide et
que la partie supérieure (9) formant une enveloppe supérieure est logée de façon flottante sur la couche intermédiaire (15) absorbant l'énergie.

2. Capot de carrosserie selon la revendication 1, **caractérisé en ce que** la partie inférieure (10) est en acier, en aluminium ou en magnésium et réalisée sous la forme d'une pièce en tôle ou en fonte.

3. Capot de carrosserie selon la revendication 1 ou 2, **caractérisé en ce que** la partie inférieure (10) est réalisée avec une structure à nervures (11).

4. Capot de carrosserie selon l'une des revendications 1 à 3, **caractérisé en ce que** la couche intermédiaire (15) présente une structure en nid d'abeille ou est réalisée en mousse dure, en mousse d'aluminium ou en polypropylène ou en polyuréthane structuré.

5. Capot de carrosserie selon l'une des revendications 1 à 4, **caractérisé en ce que** la partie supérieure (9) est une pièce continue en tôle d'acier, d'aluminium, en SMC, en matière plastique renforcée par des fibres de carbone ou en structure sandwich avec différentes combinaisons de matériaux.

6. Capot de carrosserie selon l'une des revendications 1 à 4, **caractérisé en ce que** la partie supérieure (9) est conçue sous la forme d'une feuille lisse solidaire avec le matériau de la couche intermédiaire (15), sachant que de la mousse dure est formée ou injectée sur toute la surface de la face inférieure de la partie supérieure (9).

7. Capot de carrosserie selon l'une des revendications 1 à 6, **caractérisé en ce que** la paroi (2) de capot s'appuie, à l'état monté, sur des éléments d'appui (3, 4) au moins d'une structure de véhicule et recouvre librement l'espace couvert (5) de la carrosserie, que la paroi (2) de capot est conçue de manière souple et déformable, dans une zone centrale de paroi de capot au moins, comme zone de choc potentielle avec un piéton dans le cas d'une collision piéton-véhicule, et
que la paroi (2) de capot passe, en section transversale, par une zone de capot centrale de manière à ce que des éléments courbes (7, 8) se raccordent latéralement à une partie centrale (6) disposée à plat et approximativement à l'horizontale et seulement faiblement bombée et viennent s'appuyer, respectivement avec une extrémité de courbe libre, sur l'élément d'appui (3, 4) latéral associé.

8. Capot de carrosserie selon l'une des revendications 1 à 7, **caractérisé en ce que** la partie inférieure (10) et / ou la couche intermédiaire (15) présentent une perforation.
